# FASCICULE DE BREVET EUROPEEN

(11) **EP 3 123 583 B1**
(45) Date de publication et mention de la délivrance du brevet: **10.11.2021**
(21) Numéro de dépôt: 15711782.1
(22) Date de dépôt: 25.03.2015
(51) Int. Cl.: H02J 1/12

(54) **MONO-ONDULEUR**
EINZIGER WECHSELRICHTER
MONO-INVERTER

(30) Priorité: 25.03.2014 FR 1452489
(43) Date de publication de la demande: 01.02.2017
(73) Titulaire: Winslim, 1630 Luxembourg (LU)
(72) Inventeur: GASPARD, Jean-Yves, F-69400 Gleize (FR)
(74) Mandataire: Decobert, Jean-Pascal
(86) Numéro de dépôt international: PCT/EP2015/056336
(87) Numéro de publication internationale: WO 2015/144740

(56) Documents cités:
- GB-A- 2 492 342
- None

## Description

### DOMAINE TECHNIQUE DE L'INVENTION

La présente invention concerne des systèmes de transfert d'énergie à induction comme des systèmes de chauffe par induction, par exemple, ou des systèmes de charges de batteries par induction, ces exemples étant non limitatifs.

Ces systèmes de transfert d'énergie à induction comportent des convertisseurs d'énergie comme des onduleurs, qui sont alimentés par le réseau d'alimentation électrique, aussi appelé secteur et qui transforment cette énergie en une énergie électrique ou thermique pour la délivrer à des systèmes.

L'invention concerne les convertisseurs dont les entrées sont multiples, et qui peuvent prendre l'énergie préférentiellement sur des entrées annexes plutôt que sur le réseau d'alimentation électrique. La source d'énergie pour les entrées annexes peut être notamment photovoltaïque, le système choisissant suivant son réglage, préférentiellement une source d'énergie d'entrée plutôt qu'une autre.

### ÉTAT DE LA TECHNIQUE

Les systèmes de transfert d'énergie par induction comportent en général une alimentation, comme le secteur alternatif, qui est redressée, filtré et alimente au moins un convertisseur d'énergie comme un onduleur.

Les systèmes domestiques les plus communs sont les plaques de cuisson par induction : Les plaques de cuisson par induction comportent un onduleur préférentiellement à résonnance, qui alimente un inducteur. L'inducteur présente une inductance L à laquelle on peut joindre un ou plusieurs condensateurs C formant ainsi un circuit résonnant à la fréquence f = ¹/_{(2π√(L.C'))} généralement autour de 20 kHz.

Un ustensile de cuisson, préférentiellement ferromagnétique, posé sur l'inducteur est soumis au champ alternatif à la fréquence f de celui-ci et est le siège de courants induits dits de Foucault, provoquant son échauffement.

Les intérêts de ce système sont nombreux :
- Grande facilité de réglage de puissance par le contrôle de l'onduleur à résonance.
- Grande dynamique de fonctionnement liée au fait que l'énergie est dissipée directement dans la charge.
- Rendement élevé pour la même raison.
- Contrôle de la température électronique précis et forte puissance possible, contribuant au succès de ces technologies.

D'autres applications grand public, donc à fort potentiel de volume, commencent à voir le jour comme le transfert d'énergie par induction ou les chauffe-eaux par induction.

Le transfert d'énergie par induction repose sur un principe similaire, à savoir que le récipient posé sur l'inducteur est remplacé par un second inducteur, formant ainsi un transformateur Haute Fréquence (HF) permettant de récupérer au secondaire une énergie électrique.

Naturellement, l'énergie transférée peut être utilisée à d'autres fins, comme des alimentations électriques sans fil de dispositif mobiles, camping-car, alimentations de stands pour des marchés, etc... Le système sans fil présentant un grand nombre d'avantage dont notamment une isolation galvanique assurant une grande sécurité de fonctionnement en milieu extérieur.

La technologie des chauffe-eaux à induction est plus récente, l'induction permettant de la même façon que dans les plaques de cuisson une grande puissance de chauffe tout en conservant une densité de puissance optimale pour le transfert d'énergie, une grande dynamique, un réglage précis de puissance et surtout dans le cas du chauffe-eau, une insensibilité au calcaire de l'inducteur : l'inducteur n'étant plus l'élément chauffant, il n'est plus affecté, comme peut l'être une résistance immergée ou dans un fourreau, par les dépôts de tartre.

Les chauffe-eaux à induction sont aussi une réponse à l'avènement des nouvelles énergies dites intermittentes comme l'éolien ou le solaire dont on ne maîtrise pas la production. Il est en effet possible de communiquer avec le système de contrôle de l'onduleur pour lui indiquer en temps réel de quelle énergie il peut disposer. Ceci permet de faire coïncider l'utilisation et la production, ce qui est un handicap majeur de ces nouvelles énergies. Ceci est naturellement aussi rendu possible par le fait que le chauffe-eau est un système à accumulation journalière, le moment et la puissance de chauffe n'étant pas fondamentaux par rapport à son bon fonctionnement, l'essentiel étant de disposer d'une énergie journalière suffisante pour la production de l'eau chaude. Les tirages d'eau chaude domestique étant généralement réguliers, il est possible d'équiper les systèmes de contrôle des onduleurs de programmes d'anticipation voir d'apprentissage, les tirages d'eau, dont l'information est facilement liée à l'évolution des capteurs de températures situés dans la cuve ou sur les tubes de sorties, étant aussi facilement enregistrables quotidiennement ou par semaine.

Il est aussi connu depuis peu de WO-A1-2014026879 des systèmes à induction appelés « combi » possédant plusieurs sorties. Le constat est en effet qu'un même type de générateur est employé pour plusieurs applications dont, par exemple non limitatif, les trois applications citées au préalable soit les plaques de cuisson par induction, les chauffe-eaux par induction et la recharge de véhicules par induction. Pour un onduleur 16A-230V soit d'une puissance maximale de 3700W, le temps d'utilisation d'une plaque de cuisson est en moyenne d'une demi-heure par jour. Le temps d'utilisation d'un chauffe-eau est en moyenne de deux heures par jour. Le temps de charge moyen d'un véhicule électrique est de quatre heures par jour (1/2 charge lente). Il est donc possible et judicieux d'utiliser un seul et même onduleur pour ces applications, voire d'autres, les applications nécessitant l'usage immédiat de l'onduleur étant prioritaire (la cuisson) par rapport aux applications dites de stockage. L'onduleur est ainsi affecté cycliquement à différentes charges permettant de cuisiner à midi, de chauffer l'eau l'après-midi pour absorber l'énergie intermittente et de charger un véhicule électrique la nuit, cet exemple étant purement illustratif quant aux appareils et aux instants d'utilisations et de charges de ces appareils.

Toutefois, ces dispositifs de type « combi » présentent le désavantage de ne pas optimiser complètement la consommation électrique de l'utilisateur. En effet, aucune solution n'est proposée pour utiliser des sources d'énergie vertes afin d'optimiser pleinement la consommation électrique de l'utilisateur.

Enfin, la problématique des énergies dites vertes du type photovoltaïque, par exemple, est la difficulté de faire correspondre la production et l'utilisation de l'électricité. En effet, un panneau photovoltaïque ne produira de l'électricité que par un temps ensoleillé. Il est donc impossible de faire correspondre la demande et l'offre énergétique dans ces conditions. Bien que WO-A1-2014026879 propose d'optimiser la consommation électrique d'un chauffe-eau, celle-ci reste liée à un mode d'alimentation figé qui, dans le cas d'une alimentation secteur, est disponible à tout moment et, dans le cas d'une alimentation à partir d'énergie verte, est intermittente.

De plus, on connait de l'état de l'art, par exemple GB2492342, des systèmes utilisant deux sources d'alimentation distinctes, l'une par exemple issue de panneaux photovoltaïques, et une autre d'une source de tension alternative, l'une ou les deux sources pouvant présenter des fluctuations de puissance dans le temps. Il est alors connu d'utiliser l'une ou l'autre source d'énergie en parallèle de l'autre afin de compenser les fluctuations de puissance. Dans ce genre de configuration, un module externe de poursuite du point maximal de puissance (MPPT) comprenant des circuits logiques est utilisé en sortie des panneaux photovoltaïques afin de maximiser leur rendement.

Les énergies intermittentes (photovoltaïque, turbine : éolien, hydraulique) se développent au niveau de parcs de moyenne puissance et aussi au niveau de l'usage domestique. Un utilisateur particulier peut aussi équiper sa toiture, ou toute autre surface permettant de recevoir le soleil, de panneaux photovoltaïques. Ces panneaux sont connectés directement au indirectement à un onduleur dont le rôle est d'une part de gérer l'énergie variable générée par les panneaux (MPPT), d'autre part, la mise en forme de la tension continue produite par les panneaux en signal alternatif 50 Hz (ou 60 Hz suivant les pays) permettant l'utilisation locale de cette énergie par des appareils standards ou permettant une synchronisation au niveau de la distribution électrique dans le but de revendre cette production électrique. De plus de nombreux progrès sont en cours dans l'amélioration du rendement des panneaux photovoltaïques faisant de cette énergie verte une des plus accessibles pour les particuliers.

La présente invention propose une amélioration de la gestion énergétique d'un système de transfert d'énergie inductif du type chauffe-eau à induction par exemple non limitatif. De manière inventive, elle propose l'utilisation d'un seul et unique onduleur apte à coopérer avec au moins deux sources d'énergies différentes et dont au moins une est une source d'énergie verte.

### RÉSUMÉ DE L'INVENTION

Suivant un aspect, l'invention concerne un dispositif d'alimentation pour installation inductive selon la revendication 1, avec des modes de réalisation tels que définis dans les revendications dépendantes.

Ainsi, l'invention permet de tirer profit de plusieurs sources d'alimentation sans rendre complexe le circuit d'alimentation de l'inducteur. Le rendement reste de ce fait particulièrement élevé.

Ainsi, un seul et unique onduleur joue le rôle d'onduleur photovoltaïque et d'onduleur de transfert d'énergie par induction.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- la FIGURE 1 représente le principe général d'un mode de réalisation de la présente invention ;
- la FIGURE 2 représente un schéma électrique détaillé d'un mode de réalisation de la présente invention ;
- la FIGURE 3 représente un diagramme du fonctionnement d'un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Il est précisé que dans le cadre de la présente invention, le terme «consigne», «point de consigne» ou leurs équivalents ont pour définition un niveau de température configurable par un utilisateur. A cette consigne de température, dans le cas non limitatif de l'utilisation de la présente invention pour alimenter un chauffe-eau, correspond un mode d'alimentation.

Il est précisé que dans le cadre de la présente invention, le terme «secteur » ou ses équivalents ont pour définition une source de tension alternative délivrant un signal de paramètres électriques réguliers, issu d'un réseau, par exemple un signal de 230 V à une fréquence de 50 Hz, provenant d'un réseau électrique national.

De préférence, le terme «secteur» ou ses équivalents comprennent une source de tension alternative délivrée par une installation non transportable générant de l'électricité, par exemple une centrale nucléaire.

Avantageusement, le terme «secteur» ou ses équivalents comprennent une source de tension alternative délivrée au travers d'un réseau électrique publique à destination d'une utilisation domestique par exemple.

Il est précisé que dans le cadre de la présente invention, le terme «énergie verte», «énergie intermittente», « énergie renouvelable » ou leurs équivalents ont pour définition une énergie provenant d'un système de panneaux solaires, d'éoliennes, et/ou toute autre sorte d'énergie autre que le secteur et notamment ne présentant pas la même régularité au cours du temps.

On entend par inducteur 101 un élément de transfert d'énergie par induction. Typiquement, cet élément pourra comprendre un bobinage apte à générer un champ magnétique. L'inducteur 101 est destiné à coopérer avec une charge telle qu'un matériau présentant une conductivité électrique où le courant induit génère un échauffement ou encore un bobinage secondaire.

On entend par commutateur un dispositif permettant de basculer d'une source d'énergie à une autre. Dans la présente invention et dans le cas de deux sources d'énergie, un commutateur est également nommé relais inverseur.

Les moyens de commutation comprennent des moyens de pilotage qui permettent la commutation entre au moins deux modes de fonctionnement : un mode adapté à une source d'alimentation en tension alternative 300 et un mode adapté à une source d'alimentation en tension continue 200.

L'existence d'un mode de fonctionnement propre à chaque mode d'alimentation permet d'optimiser l'énergie délivrée par chaque source d'alimentation.
- Les moyens de pilotages comprennent un module de poursuite du point maximal de puissance (MPPT) 600 en communication avec un processeur central 800 pour piloter l'onduleur 100 lorsque la présente invention est commutée sur le mode de fonctionnement adapté à une source d'alimentation photovoltaïque en tension continue 200.

Avant d'entrer dans le détail de modes de réalisation préférés notamment en référence aux figures, on énonce ci-après différentes options que peut préférentiellement mais non limitativement présenter l'invention, ces options pouvant être mises en œuvre, soit seules, soit suivant toute combinaison entre elles :
Afin de maximiser la puissance disponible au niveau de panneaux photovoltaïques, le processeur central 800 utilise le module de MPPT 600.
- Avantageusement, le module de poursuite du point maximal de puissance (MPPT) 600 utilise un algorithme du type Perturbation et Observation.

Il s'agit d'un algorithme basé sur le principe d'essai/erreur. Continuellement, lorsque le mode de fonctionnement correspond à l'énergie des panneaux photovoltaïques, le module MPPT 600 assure une modification de la fréquence de l'onduleur 100 et mesure la puissance ainsi obtenue de sorte à maximiser celle-ci.
- Avantageusement, la présente invention comporte, pour une source d'alimentation en tension continue 200, un filtre de compatibilité électromagnétique (CEM) 201.
- Avantageusement, la présente invention comporte, pour une source de tension continue, un commutateur de tension continue (DC) 500.

Ce commutateur DC 500 permet au processeur central 800 de commuter sur la source d'alimentation en tension continue 200.
- Avantageusement, le commutateur de tension continue 500 dispose d'un module de contrôle 502.

Ce module de contrôle 502 permet un test de la puissance disponible au niveau des panneaux photovoltaïques 200 avant et à chaque commutation sur la source d'alimentation en tension continue 200.
- Avantageusement, les moyens de pilotages pilotent le commutateur de tension continue 500 de la source de tension continue 200 via une commande relais 501.

La commande relais 501 permet le contrôle du commutateur 500 par le processeur central 800.
- Avantageusement, la présente invention peut être appliquée à un dispositif de chauffage de l'eau comportant un corps de chauffe destiné à contenir un volume d'eau, une charge inductive agencée pour chauffer le volume d'eau et la présente invention configurée pour que l'inducteur 101 génère un courant induit dans la charge inductive.
- Avantageusement, les moyens de pilotages sont configurés pour :
   - Appliquer une première consigne de température, dite consigne AC, de chauffage de l'eau dans le mode adapté à une source d'alimentation en tension alternative 300.
   - Appliquer une deuxième consigne de température, dite consigne DC, de chauffage de l'eau dans le mode adapté à une source d'alimentation en tension continue 200.

La deuxième consigne étant supérieure à la première consigne.
- Avantageusement, les moyens de commutation sont configurés sur au moins une première plage horaire prédéterminée pour commuter :
   - Vers le mode d'alimentation en tension continue à partir d'un seuil de puissance disponible à l'entrée correspondant à la source d'alimentation en tension continue 200.
   - Vers le mode d'alimentation en tension alternative en dessous dudit seuil de puissance.

Cette première plage horaire correspond à la période de la journée où il fait jour. Ainsi, le processeur central 800 peut tester dans cette plage horaire la puissance disponible au niveau des panneaux photovoltaïques 200.
- Avantageusement, les moyens de commutation sont configurés sur au moins une deuxième plage horaire prédéterminée pour commuter vers le mode d'alimentation en tension alternative 300.

Cette seconde plage horaire correspond aux heures de nuit. De ce fait, durant la nuit le processeur central 800 ne tente pas de test de puissance sur les panneaux photovoltaïques 200.
- Avantageusement, la présente invention peut trouver une application dans une installation comportant au moins deux sources d'énergie et un dispositif de chauffage de l'eau comportant un corps de chauffe destiné à contenir un volume d'eau, une charge inductive agencée pour chauffer le volume d'eau et la présente invention configurée pour que l'inducteur 101 génère un courant induit dans la charge inductive.
- Avantageusement, une des deux sources d'alimentation est une source d'énergie dite « verte ».

L'utilisation d'énergie verte permet une économie financière non négligeable pour l'utilisateur.
- Avantageusement, une des deux sources d'alimentation est une source d'énergie solaire photovoltaïque 200.

L'utilisateur peut aisément disposer des panneaux photovoltaïques sur la toiture de sa maison par exemple afin de bénéficier de cette source d'énergie gratuite.
- Avantageusement, une des deux sources d'alimentation est une source d'alimentation de type « secteur » 300.

L'utilisation du secteur comme seconde source d'alimentation est nécessaire puisque la seconde source d'alimentation est une source dite intermittente.
- Avantageusement, un ou plusieurs opto-coupleurs 503 sont présents dans le commutateur de tension continue 500.

L'utilisation d'opto-coupleurs 503 permet d'isoler galvaniquement le commutateur DC 500 et le processeur central 800.
- Avantageusement, une connexion opto-isolée 504 est présente entre le commutateur de tension continue 500 et un processeur central 800.

Cette connexion permet une communication entre le commutateur DC 500 et le processeur central 800 et cela sans contact galvanique.
- Avantageusement, le processeur central 800 possède une horloge indiquant la date et l'heure.

Cette horloge permet au système de connaître la date et l'heure et de ce fait les horaires de jour et de nuit, ainsi que les temps d'ensoleillement théoriques.
- Avantageusement, l'onduleur 100 envoi au processeur central 800 des informations.

Pour piloter l'onduleur, le processeur central 800 a besoin d'informations concernant l'état de l'onduleur 100.
- Avantageusement, l'onduleur 100 envoi au processeur central 800 des mesures de puissance.

Les informations de puissance sont nécessaires pour que le MPPT 600 puisse être utilisé par le processeur central 800 pour le pilotage de l'onduleur 100.
- Avantageusement, l'onduleur 100 envoi au processeur central 800 des mesures de courant.
   - Avantageusement, l'onduleur 100 envoi au processeur central 800 des mesures de tension.
   - Avantageusement, l'onduleur 100 envoi au processeur central 800 des mesures de phase.
- Avantageusement, une interface utilisateur permet à un utilisateur de choisir les modes de fonctionnement du dispositif et de paramétrer celui-ci.
- Avantageusement, une des deux sources d'alimentation est une source d'énergie solaire photovoltaïque 200.
- Avantageusement, une des deux sources d'alimentation est une source d'alimentation secteur 300.
   - Avantageusement, le processeur central 800 possède une entrée d'informations prévisionnelles climatiques.

Le recours à un module de données météorologiques peut permettre au processeur central 800 d'optimiser son fonctionnement et de pouvoir prévoir et anticiper les ensoleillements avenir dans le cas de l'utilisation de panneaux photovoltaïques 200 comme source d'alimentation en tension continue.
- Avantageusement, un mode d'alimentation automatique privilégiant la source d'énergie verte est disponible.

L'utilisateur peut s'il le veut n'utiliser que la source d'alimentation en tension continue 200 afin de réaliser des économies ou bien car sa situation ne lui permet pas d'utiliser le secteur comme source d'alimentation.

Suivant un mode de réalisation, la présente invention dispose de deux sources d'alimentation : Une source en tension continue 200, par exemple des panneaux photovoltaïques, et une source en tension alternative 300, le secteur par exemple. Le présent dispositif est configuré de sorte qu'il puisse choisir en fonction de paramètres utilisateurs ou préétablis, le type de source d'alimentation à utiliser.

Suivant un mode de réalisation, la présente invention propose plusieurs modes de fonctionnement : Un mode figé et un mode automatique.

Le mode figé correspond à une configuration du système selon laquelle une seule source d'énergie est utilisée. De ce fait le mode d'alimentation est figé. Par exemple non limitatif, l'utilisateur peut décider d'utiliser uniquement les panneaux photovoltaïques 200 comme source d'alimentation indépendamment de l'ensoleillement disponible, ou à l'inverse, le système peut être figé sur la source d'alimentation secteur 300.

Le mode automatique correspond à une configuration du système selon laquelle, par exemple non limitatif, le mode solaire est activé par défaut. Suivant ce mode de fonctionnement, l'onduleur 100 passe en mode actif et le système essaie alors d'atteindre le point de consigne de température DC, propre au mode d'alimentation en tension continue provenant des panneaux photovoltaïques 200, défini par l'utilisateur préalablement ou préétabli. Si la consigne ne peut pas être atteinte à cause d'une puissance disponible insuffisante au niveau de l'énergie solaire, et si l'écart entre le point de consigne et la mesure actuelle est supérieure à une valeur prédéterminée par l'utilisateur dans le système, alors le système commute en mode d'alimentation en tension alternative, sur le secteur 300, afin de permettre au système d'atteindre le point de consigne de température AC propre au mode d'alimentation en tension alternative et défini par l'utilisateur ou préétabli. Cette consigne en température AC est différente de la consigne en température DC. La consigne de température AC est inférieure à la consigne de température DC.

Selon un mode de réalisation particulièrement avantageux, la présente invention utilise une seule et unique source d'énergie à la fois. La commutation d'une source d'énergie à une autre est en mode tout ou rien. De ce fait, dans un premier cas 100% de l'énergie utilisée par le système provient de la source d'énergie secteur et 0% provient des panneaux photovoltaïques, dans un second cas 100% de l'énergie utilisée par le système provient des panneaux photovoltaïques et 0% provient de la source d'énergie secteur.

Dans le cas où il fait jour mais qu'il n'y a pas d'énergie photovoltaïque de disponible, et que la température de l'eau du chauffe-eau est inférieure à la consigne AC, alors, le système va tirer son énergie du réseau électrique traditionnel, le secteur. Mais comme le temps de chauffe est généralement long, le système va périodiquement tester la source photovoltaïque pour savoir si de l'énergie verte est disponible. Selon un mode de réalisation, le système peut mémoriser les réponses aux essais successifs de puissance et en déduire un type d'ensoleillement et adapter en conséquence la périodicité des tests sur la source photovoltaïque.

Selon un mode de réalisation, le dispositif possède une ou plusieurs entrées d'informations prévisionnelles permettant d'estimer par avance au moins un paramètre d'environnement comme la température, l'ensoleillement ou le vent par exemple non limitatif. Ainsi le dispositif s'adapte à l'environnement et configure ses réglages en fonction des conditions climatiques pour maximiser la puissance disponible et diminuer au moins certains impacts météorologiques sur son fonctionnement pouvant être nuisibles pour l'utilisateur.

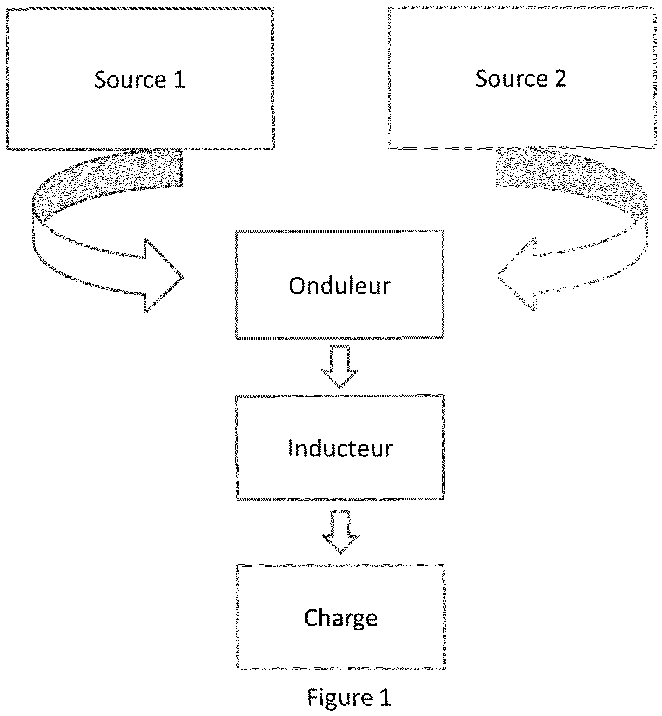

La figure 1 représente, selon un mode de réalisation non limitatif, le schéma fonctionnel de la présente invention. Deux sources d'énergie : Source 1 et Source 2 sont connectées à un unique onduleur. Un système inductif est alors connecté en sortie de l'onduleur. Il y a ensuite un transfert d'énergie entre l'inducteur et la charge. L'onduleur présente la particularité de pouvoir basculer d'une source d'alimentation à une autre en fonction de son mode de fonctionnement et/ou des paramètres utilisateur. De plus, selon un mode de réalisation, l'une ou les deux sources de courant peuvent être une source de tension continue et/ou alternative.

Avantageusement, l'onduleur bascule complètement d'une source d'énergie à une autre de manière à n'utiliser qu'une seule source d'énergie à la fois.

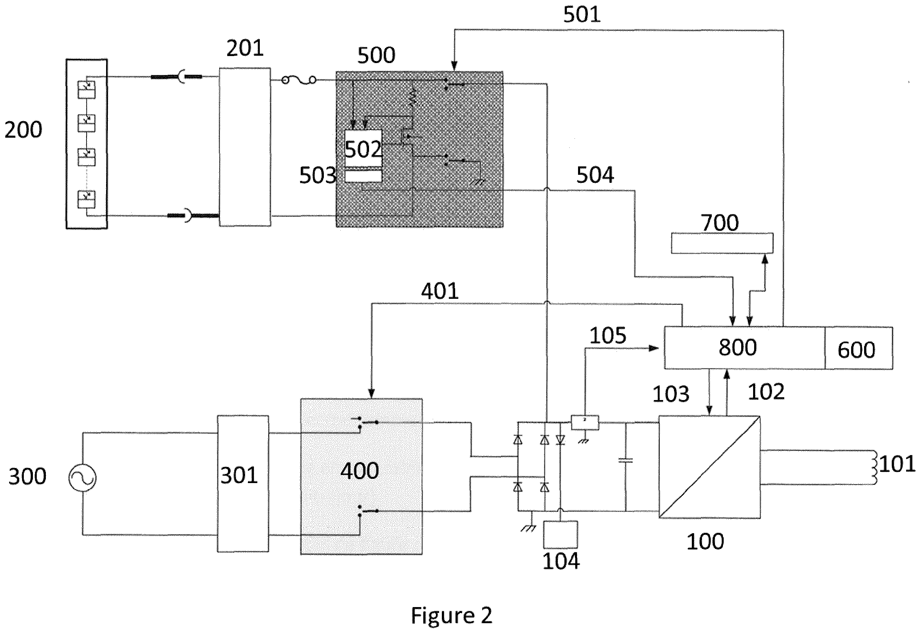

La figure 2 représente, selon un mode de réalisation et à titre d'exemple non limitatif, le schéma du circuit électrique de la présente invention. Selon ce mode de réalisation, un unique onduleur 100 est connecté à deux sources d'énergie : une source de tension continue 200 issu de panneaux photovoltaïques et une source de tension alternative issue du réseau d'alimentation électrique, le secteur 300.

La source de tension continue que constituent les panneaux photovoltaïques est connectée à l'onduleur au moyen de plusieurs éléments. Tout d'abord un filtre de compatibilité électromagnétique (CEM) 201 permet l'utilisation de façon satisfaisante des panneaux photovoltaïques 200 dans leur environnement électromagnétique, sans produire eux-mêmes de perturbations électromagnétiques pour les équipements environnants.

Ensuite, le CEM 201 est connecté en parallèle à un commutateur de tension continue (commutateur DC) 500 pouvant comporter un module de contrôle 502. Le module de contrôle 502 assure un suivi de la puissance disponible au niveau des panneaux photovoltaïques 200 de sorte que la commutation du système sur cette source d'énergie verte soit faite dans des conditions de puissance utile pour l'alimentation du dispositif à induction. Enfin, le commutateur DC 500 peut disposer d'un ou de plusieurs opto-coupleurs 503 permettant d'opto-isoler le commutateur DC 500, par une connexion 504, du processeur central 800. De ce fait, le commutateur DC 500 est connecté au processeur central 800 par un contact non galvanique. Enfin une commande relais 501 est utilisée pour piloter le commutateur DC 500 depuis le processeur central 800 du dispositif gérant l'ensemble des fonctions.

Selon l'invention, l'onduleur 100 est le seul onduleur présent dans le circuit, depuis les panneaux photovoltaïques jusqu'à l'inducteur, mutatis mutandis depuis le secteur jusqu'à l'inducteur.

La seconde source d'énergie est le secteur 300 connectée au système par divers modules dont un filtre CEM 301, permettant l'utilisation de façon satisfaisante du secteur dans son environnement électromagnétique, sans produire lui-même de perturbations électromagnétiques pour les équipements environnants. Ensuite, un commutateur de tension alternative (commutateur AC) 400 est connecté en parallèle au CEM 301. Ce commutateur AC 400 est piloté par le processeur central 800 par une connexion 401 servant de commande relais.

Ensuite, le commutateur DC 500 et le commutateur AC 400 dont tous deux connectés l'onduleur 100. Au niveau de cette connexion, une mesure de l'intensité de courant est effectuée par le processeur central 800 via la connexion 105. L'onduleur 100 est connecté également à un inducteur 101 et au processeur central 800 via les connexions 103 et 102. La connexion 102 permet d'envoyer au processeur central 800 les données concernant le courant, la tension, la phase du signal électrique, ainsi que la température, au niveau de l'inducteur 101. En retour, le processeur central 800 renvoie un signal de modulation de largeur d'impulsion (PWM) 103. Ce signal permet alors de piloter l'onduleur 100 en fréquence.

Avantageusement, le pilotage de l'onduleur 100 par le processeur central 800 se fait par une modification de sa fréquence de fonctionnement.

Enfin, le processeur central 800 possède un module de poursuite du point maximal de puissance (MPPT) 600 permettant, dans le cas de l'utilisation de la source de tension continue, de piloter la fréquence de l'onduleur 100 via le processeur central 800 afin de maximiser la puissance disponible par une mesure de la tension et du courant et en ajustant ainsi via la connexion PWM 103 la fréquence de l'onduleur 100. Le système MPPT 600 fonctionne, par exemple, suivant un algorithme du type Perturbation et Observation (P&O). Cet algorithme consiste en une recherche du point de puissance maximum par essais / erreurs. En effet, le système essaie d'atteindre le point de puissance maximale en partant d'une fréquence onduleur haute et en la réduisant progressivement via la connexion PWM 103, en mesurant la tension et le courant via la connexion 102, pour calculer la puissance. Ainsi le module MPPT 600 est configuré pour permettre au processeur central 800 de piloter l'onduleur 100 afin de maximiser la puissance délivrée par l'onduleur 100, et non celle délivrée par les panneaux photovoltaïques comme il est courant de le rencontrer dans l'art antérieur.

Selon un mode de réalisation particulièrement avantageux, le module MPPT 600 est un programme informatique configuré pour être utilisé par le processeur central 800 afin de piloter l'onduleur 100 dans l'objectif de maximiser la puissance délivrée par l'onduleur 100. L'utilisation d'un module MPPT 600 de type programme d'ordinateur permet une adaptabilité importante de la présente invention à tous types de source d'énergie. En effet, de manière préférentielle, le processeur central 800 peut évaluer, automatiquement par exemple, le type de source d'énergie actuellement utilisée par le système et adapter en conséquence ledit onduleur 100.

Ainsi, de manière préférentielle, le module MPPT 600 peut être activé si le processeur central 800 détecte des variations de puissance au niveau de l'onduleur 100 par la mesure de puissance 102 délivrée par celui-ci, avantageusement pour une entrée d'un signal électrique continu. Ces variations de puissances peuvent être liées par exemple à l'utilisation d'une source d'énergie renouvelable, comme des panneaux photovoltaïques. Inversement, le module MPPT 600 peut être désactivé dans le cas où la puissance mesurée en sortie de l'onduleur 100 est constante dans le temps.

Avantageusement, et selon un mode de réalisation préférentiel, la présente invention permet l'utilisation d'un unique onduleur 100 pouvant être adapté en fréquence à tous types de source d'énergie auxquels il peut être connecté afin d'optimiser sa puissance électrique en sortie.

L'algorithme peut être implémenté dans un programme d'ordinateur lui-même stocké dans une mémoire et lisible par au moins un processeur sous forme d'instructions. Préférentiellement, l'algorithme est intégré au micro-processeur.

Pour finir, l'ensemble du système est configurable et pilotable par une interface 700 constituée, par exemple non limitatif, d'un écran tactile ou non et d'un clavier réel et/ou virtuel. Via cette interface, l'utilisateur peut définir ses choix d'utilisation : par exemple « confort » où il privilégie la consigne AC d'eau chaude ou bien « éco » où il utilise au minimum l'énergie du secteur quitte à disposer de moins d'eau chaude si la production d'énergie photovoltaïque a été faible.

L'invention est applicable à un dispositif de stockage d'énergie comme le chauffage de l'eau. Les chauffe-eaux sont des dispositifs permettant de chauffer l'eau pour différents besoins ménagers ou industriels. Il est entendu par chauffe-eau un appareil à accumulation d'eau qui possède au moins une cuve servant de corps de chauffe de stockage d'eau chaude, dite aussi fréquemment ballon. La cuve étant la zone où l'eau est chauffée. La cuve étant dénommée fréquemment corps de chauffe ou ballon. La capacité d'une telle cuve est plus ou moins importante suivant les besoins auxquels les appareils à accumulation sont dédiés, par exemple en étant associés avec un ou des robinets de lavabo, une douche et/ou une baignoire, etc.

La présente invention trouve une application aux chauffe-eaux par induction. Ce type de chauffe-eau comprend un corps de chauffe et un dispositif de chauffage par induction, comprenant un générateur de puissance et un module inductif comprenant au moins un inducteur et au moins une charge, le au moins un inducteur étant configuré pour générer un courant induit dans la charge, caractérisé en ce que ledit au moins un inducteur et au moins une charge sont agencés plongeant dans le corps de chauffe. L'effet technique est de garantir un échange thermique direct entre le module inductif composé d'un inducteur et d'au moins une charge avec l'eau contenue dans le chauffe-eau. L'échauffement inévitable de l'inducteur, entraînant des pertes, est récupéré et sert aussi à chauffer l'eau contenue dans le chauffe-eau.

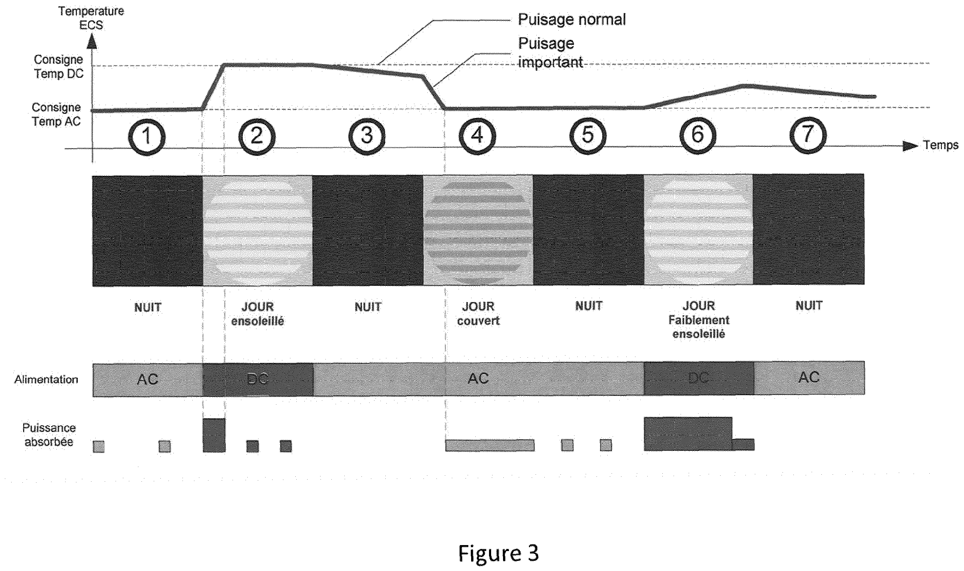

La figure 3 représente, suivant un mode de réalisation, un exemple de l'utilisation de la présente invention en mode chauffe-eau à deux entrées de source d'énergie et deux consignes de températures différentes correspondant à chacune des sources d'énergie. Ainsi, une consigne de température correspond à un mode d'alimentation. La consigne désignée comme la consigne AC correspond à la consigne de température lorsque le mode d'alimentation est le mode d'alimentation en tension alternative. La consigne désignée comme la consigne DC correspond à la consigne de température lorsque le mode d'alimentation est le mode d'alimentation en tension continue. A chaque commutation d'un mode d'alimentation à un autre, la consigne de température change également de manière à faire correspondre la consigne de température avec le mode d'alimentation sur lequel le dispositif est commuté. Selon un mode de réalisation, la consigne de température AC est inférieure à la consigne de température DC.

La figure 3 représente quatre nuits et trois journées. A titre d'exemple, le mode de fonctionnement est indiqué en fonction de la présence ou non d'énergie au niveau des panneaux photovoltaïques.

Par exemple, la zone 1 représente une nuit, il n'y a donc pas d'énergie photovoltaïque de disponible, le générateur est donc commuté sur la source de tension alternative, le secteur.

Dans la zone 2, qui représente une journée ensoleillée, l'énergie photovoltaïque est disponible, elle est donc stockée dans le ballon. Le générateur se trouve donc commuté sur la source d'énergie de tension continue.

Dans la zone 3, qui représente une nuit, l'énergie photovoltaïque n'est pas disponible. Toutefois, l'énergie emmagasinée dans la journée suffit à assurer la fourniture d'Eau Chaude Sanitaire (ECS) jusqu'au lendemain. Le générateur est donc commuté sur le secteur mais ne consomme pas d'énergie, il est en veille.

Dans la zone 4, qui correspond à une journée sans soleil, l'énergie photovoltaïque n'étant pas disponible, le générateur est commuté sur le secteur pour le chauffage de l'ECS.

Dans la zone 5, correspondant à la nuit, l'énergie photovoltaïque étant absente, le générateur est commuté sur le secteur.

Dans la zone 6, qui représente une journée où peu d'énergie photovoltaïque est disponible, le générateur est commuté sur la source de tension continue. L'énergie stockée n'est pas suffisante pour atteindre la consigne, mais suffisante pour fournir l'ECS demandée sans basculer sur la source d'énergie en tension alternative.

Dans la zone 7, faisant nuit, le générateur est commuté sur la tension alternative.

Selon un mode de réalisation, la commutation entre les modes d'alimentation AC et DC est piloté par le processeur central 800. La gestion de la commutation peut reposer, entre autres, sur une information temporelle. Le processeur central 800 possède une horloge servant de calendrier et permettant au système de connaître la date et l'heure actuelles. Cela permet alors de connaître les temps d'ensoleillement théoriques par exemple pour l'utilisation de panneaux photovoltaïques. Suivant le mode de fonctionnement choisi par l'utilisateur de la présente invention, le processeur central 800 peut vouloir connaître la puissance disponible au niveau des panneaux photovoltaïques 200. Pour cela le processeur central 800 doit commuter sur le mode d'alimentation en tension continue et tester par le module 502 la puissance disponible. Suivant les paramètres utilisateurs, si cette puissance mesurée est suffisante, le processeur central 800 reste commuté sur cette source d'alimentation. Si la puissance mesurée est insuffisante, et suivant les paramètres utilisateurs, le processeur central 800 commute sur la mode d'alimentation en tension alternative. Afin d'optimiser la fréquence de ces tests de puissance au niveau des panneaux photovoltaïques, le processeur central 800 se réfère, suivant un mode de réalisation, à son horloge. Cette information temporelle est prise en compte pour optimiser la fréquence de test de puissance au niveau des panneaux photovoltaïques. Par exemple, la nuit, le processeur central 800 ne réalisera pas de test de puissance au niveau des panneaux photovoltaïques car son horloge lui indique qu'il fait nuit. Ainsi, suivant un mode de réalisation, une partie de la gestion de la commutation est fonction de paramètres temporels. Ces paramètres définissent par exemple au moins deux plages temporelles avec des fonctionnements différents, par exemple jour et nuit.

Ainsi, la présente invention, suivant un mode de réalisation, assure de manière autonome, en fonction des réglages utilisateur et de paramètres temporels, le basculement d'une source d'alimentation à une autre afin de maximiser la puissance disponible et de minimiser les dépenses énergétiques liées à l'utilisation de la source d'alimentation de tension alternative, le secteur.

Selon un mode de réalisation, la présente invention est un dispositif d'alimentation pour installation inductive comprenant un onduleur 100 alimentant au moins un inducteur 101 et comprenant :
- Une unique entrée d'alimentation. Cette unique entrée d'alimentation est configurée pour une source d'alimentation en tension continue, par exemple issue de panneaux photovoltaïques.
- un seul et unique onduleur (100) configuré pour transformer un courant électrique d'entrée issu d'une source d'énergie en un courant électrique de sortie ;

Ainsi, un seul et unique onduleur joue le rôle d'onduleur photovoltaïque et d'onduleur de transfert d'énergie par induction.

L'invention n'est pas limitée aux modes de réalisations précédemment décrits et s'étend à tous les modes de réalisation couverts par les revendications.

### REFERENCES

- 100.: Onduleur
- 101.: Inducteur
- 102.: Signal de Courant, Tension, Température et Phase
- 103.: Signal de modulation de largeur d'impulsion
- 104.: Alimentation à découpage
- 105.: Mesure du courant

- 200.: Panneaux Photovoltaïques
- 201.: Filtre de compatibilité électromagnétique

- 300.: Secteur
- 301.: Filtre de compatibilité électromagnétique

- 400.: Commutateur Tension alternative (AC)
- 401.: Signal de commutation

- 500.: Commutateur Tension continue (DC)
- 501.: Signal de commutation
- 502.: Contrôle
- 503.: Opto-coupleurs
- 504.: Liaison opto-isolée

- 600.: Logiciel de Poursuite du Point Maximum de Puissance

- 700.: Clavier et écran de contrôle

- 800.: Processeur central

## Revendications

1. Dispositif d'alimentation pour installation inductive comprenant un onduleur (100) alimentant au moins un inducteur (101) et ledit dispositif comprenant :
- au moins deux entrées d'alimentation, chacune apte à être raccordée à une source d'énergie différente ;
- un seul et unique onduleur (100) configuré pour transformer un courant électrique d'entrée issu d'une des au moins deux sources d'énergie en un courant électrique de sortie ;
- des moyens de commutation d'une source d'alimentation à une autre, ces moyens de commutation comprenant des moyens de pilotage qui permettent la commutation entre au moins deux modes de fonctionnement : un mode adapté à une source d'alimentation en tension alternative (300) et un mode adapté à une source d'alimentation en tension continue (200) :
dans lequel lesdits moyens de pilotage comprennent un module de poursuite du point maximal de puissance, MPPT, (600) de l'onduleur (100), ledit dispositif étant **caractérisé en ce que** le MPPT (600) est en communication avec un processeur central (800), le processeur central (800) étant configuré pour piloter ledit onduleur (100) par modification de sa fréquence de fonctionnement par une mesure de la tension et du courant au niveau dudit inducteur (101), et ce lorsque le dispositif est commuté sur le mode de fonctionnement adapté à une source d'alimentation en tension continue (200), et dans lequel le module de poursuite du point maximal de puissance (MPPT) (600) est un programme informatique configuré pour être utilisé par le processeur central (800).

2. Dispositif selon la revendication précédente dans lequel le module de poursuite du point maximal de puissance (MPPT) (600) est configuré pour utiliser un algorithme du type Perturbation et Observation.

3. Dispositif selon l'une quelconque des revendications précédentes dans lequel ledit onduleur (100) est configuré pour être piloté en fréquence par ledit processeur central (800) par l'envoi d'au moins un signal de modulation de largeur d'impulsion (PWM) (103) en réponse à la réception d'un signal (102) permettant le transfert de données concernant l'inducteur (101).

4. Dispositif selon la revendication précédente dans lequel lesdites données concernant l'inducteur (101) sont prises parmi les suivantes : le courant, la tension, la phase du signal électrique, la température.

5. Dispositif selon l'une quelconque des revendications précédentes comportant, pour une source d'alimentation en tension continue (200), un filtre de compatibilité électromagnétique (CEM) (201).

6. Dispositif selon l'une quelconque des revendications précédentes comportant, pour une source de tension continue (200), un commutateur de tension continue (500) et dans lequel les moyens de pilotage sont configurés pour piloter le commutateur de tension continue (500) de la source de tension continue (200) via une commande relais (501).

7. Dispositif selon l'une quelconque des revendications précédentes comportant, pour la source d'alimentation en tension alternative (300), un commutateur (400).

8. Dispositif selon la revendication précédente dans lequel les moyens de pilotage sont configurés pour piloter le commutateur de tension alternative (400) de la source de tension alternative (300) via une commande relais (401).

9. Dispositif de recharge de batterie pour véhicule électrique et/ou hybride comportant une batterie, un chargeur, un dispositif inductif secondaire apte à coopérer avec le chargeur et un dispositif selon l'une des revendications de 1 à 8 configuré pour que l'inducteur (101) génère un courant induit dans le dispositif inductif secondaire.

10. Dispositif de chauffage de l'eau comportant un corps de chauffe destiné à contenir un volume d'eau, une charge inductive agencée pour chauffer le volume d'eau et un dispositif selon l'une des revendications 1 à 8 configuré pour que l'inducteur (101) génère un courant induit dans la charge inductive.

11. Dispositif selon la revendication précédente comportant un dispositif selon l'une des revendications 1 à 8, les moyens de pilotage étant configurés pour :
- appliquer une première consigne de température, dite consigne AC, de chauffage de l'eau dans le mode adapté à une source d'alimentation en tension alternative (300) ;
- appliquer une deuxième consigne de température, dite consigne DC, de chauffage de l'eau dans le mode adapté à une source d'alimentation en tension continue (200) ;
La deuxième consigne étant supérieure à la première consigne.

12. Dispositif selon la revendication précédente dans lequel les moyens de commutation sont configurés sur au moins une première plage horaire prédéterminée pour commuter :
- vers le mode d'alimentation en tension continue à partir d'un seuil de puissance disponible à l'entrée correspondant à la source d'alimentation en tension continue (200) ;
- vers le mode d'alimentation en tension alternative en dessous dudit seuil de puissance.

13. Dispositif selon les revendications 11 ou 12 dans lequel les moyens de commutation sont configurés sur au moins une deuxième plage horaire prédéterminée pour commuter vers le mode d'alimentation en tension alternative.

14. Dispositif selon l'une quelconque des revendications précédentes dans lequel une interface utilisateur permet à un utilisateur de choisir les modes de fonctionnement du dispositif et de paramétrer celui-ci.

15. Installation comportant au moins deux sources d'énergie et un dispositif selon l'une des revendications 1 à 8 et/ou un dispositif selon l'une des revendications 9 à 14, et dans lequel une des deux sources d'alimentation est une source d'énergie solaire photovoltaïque (200) et/ou dans lequel une des deux sources d'alimentation est une source d'alimentation secteur (300).

## Patentansprüche

1. Versorgungsvorrichtung für eine induktive Installation, umfassend einen Wechselrichter (100), der mindestens einen Induktor (101) versorgt, und wobei die Vorrichtung Folgendes umfasst:
- mindestens zwei Versorgungseingänge, wobei jeder imstande ist, an eine unterschiedliche Energiequelle angeschlossen zu werden;
- einen einzigen Wechselrichter (100), der konfiguriert ist, um einen aus einer der mindestens zwei Energiequellen stammenden elektrischen Eingangsstrom in einen elektrischen Ausgangsstrom umzuwandeln;
- Mittel zum Umschalten von einer Versorgungsquelle auf eine andere, wobei diese Mittel zum Umschalten Mittel zum Steuern umfassen, die das Umschalten zwischen mindestens zwei Betriebsmodi erlauben: einen Modus, der einer Versorgungsquelle mit Wechselspannung (300) angepasst ist, und einen Modus, der einer Versorgungsquelle mit Gleichspannung (200) angepasst ist;
wobei die Mittel zum Steuern ein Verfolgungsmodul des Punktes maximaler Leistung, MPPT, (600) des Wechselrichters (100) umfassen, wobei die Vorrichtung **dadurch gekennzeichnet ist, dass** das MPPT (600) in Verbindung mit einem zentralen Prozessor (800) ist, wobei der zentrale Prozessor (800) konfiguriert ist, um den Wechselrichter (100) durch Ändern seiner Betriebsfrequenz durch Messen der Spannung und des Stroms im Bereich des Induktors (101) zu steuern, und dies, wenn die Vorrichtung in den Betriebsmodus, die einer Versorgungsquelle mit Gleichspannung (200) angepasst ist, umgeschaltet wird, und wobei das Verfolgungsmodul des Punktes maximaler Leistung (MPPT) (600) ein Computerprogramm ist, das konfiguriert ist, um durch den zentralen Prozessor (800) verwendet zu werden.

2. Vorrichtung nach dem vorstehenden Anspruch, wobei das Verfolgungsmodul des Punktes maximaler Leistung (MPPT) (600) konfiguriert ist, um einen Algorithmus in der Art Störung und Beobachtung zu verwenden.

3. Vorrichtung nach einem der vorstehenden Ansprüche, wobei der Wechselrichter (100) konfiguriert ist, um hinsichtlich der Frequenz durch den zentralen Prozessor (800) durch Senden mindestens eines Signals einer Impulsbreitenmodulation (PWM) (103) als Reaktion auf den Empfang eines Signals (102) gesteuert zu werden, welches die Übertragung von Daten hinsichtlich des Induktors (101) erlaubt.

4. Vorrichtung nach dem vorstehenden Anspruch, wobei die Daten hinsichtlich des Induktors (101) aus den Folgenden entnommen werden: dem Strom, der Spannung, der Phase des elektrischen Signals, der Temperatur.

5. Vorrichtung nach einem der vorstehenden Ansprüche, die für eine Versorgungsquelle mit Gleichspannung (200) einen Filter für elektromagnetische Kompatibilität (CEM) (201) beinhaltet.

6. Vorrichtung nach einem der vorstehenden Ansprüche, die für eine Gleichspannungsquelle (200) einen Gleichspannungsumschalter (500) beinhaltet, und wobei die Mittel zum Steuern zur Steuerung des Gleichspannungsumschalters (500) der Gleichspannungsquelle (200) über eine Relaissteuerung (501) konfiguriert sind.

7. Vorrichtung nach einem der vorstehenden Ansprüche, die für die Versorgungsquelle mit Wechselspannung (300) einen Umschalter (400) beinhaltet.

8. Vorrichtung nach dem vorstehenden Anspruch, wobei die Mittel zum Steuern konfiguriert sind, um den Wechselspannungsumschalter (400) der Wechselspannungsquelle (300) über eine Relaissteuerung (401) zu steuern.

9. Batterieladevorrichtung für ein Elektro- und/ oder Hybridfahrzeug, die eine Batterie, ein Ladegerät, eine sekundäre induktive Vorrichtung, die imstande ist, mit dem Ladegerät zusammenzuwirken, und eine Vorrichtung nach einem der Ansprüche von 1 bis 8 beinhaltet, die konfiguriert ist, damit der Induktor (101) einen Strom erzeugt, der in die sekundäre induktive Vorrichtung induziert wird.

10. Vorrichtung zum Erwärmen von Wasser, die einen Heizkörper beinhaltet, der dazu bestimmt ist, ein Wasservolumen zu enthalten, eine induktive Last, die angeordnet ist, um das Wasservolumen zu erwärmen und eine Vorrichtung nach einem der Ansprüche 1 bis 8, die konfiguriert ist, damit der Induktor (101) einen Strom erzeugt, der in die induktive Last induziert wird.

11. Vorrichtung nach dem vorstehenden Anspruch, die eine Vorrichtung nach einem der Ansprüche 1 bis 8 beinhaltet, wobei die Mittel zum Steuern konfiguriert sind zum:
- Anwenden eines ersten Temperatursollwerts, AC-Sollwert genannt, zum Erwärmen des Wassers in dem Modus, der einer Versorgungsquelle mit Wechselspannung (300) angepasst ist;
- Anwenden eines zweiten Temperatursollwerts, DC-Sollwert genannt, zum Erwärmen des Wassers im Modus, der einer Versorgungsquelle mit Gleichspannung (200) angepasst ist;
Wobei der zweite Sollwert größer als der erste Sollwert ist.

12. Vorrichtung nach dem vorstehenden Anspruch, wobei die Mittel zum Umschalten in mindestens einem ersten vorbestimmten Zeitraum konfiguriert sind, um wie folgt umzuschalten:
- in den Versorgungsmodus mit Gleichspannung ausgehend von einer verfügbaren Leistungsschwelle am Eingang, der der Versorgungsquelle mit Gleichspannung (200) entspricht;
- in den Versorgungsmodus mit Wechselspannung unterhalb der Leistungsschwelle.

13. Vorrichtung nach den Ansprüchen 11 oder 12, wobei die Mittel zum Umschalten in mindestens einem zweiten vorbestimmten Zeitraum konfiguriert sind, um in den Versorgungsmodus mit Wechselspannung umzuschalten.

14. Vorrichtung nach einem der vorstehenden Ansprüche, wobei es eine Benutzeroberfläche einem Nutzer erlaubt, die Betriebsmodi der Vorrichtung zu wählen und diese zu parametrieren.

15. Installation, die mindestens zwei Energiequellen und eine Vorrichtung nach einem der Ansprüche 1 bis 8 und/ oder eine Vorrichtung nach einem der Ansprüche 9 bis 14 beinhaltet, und wobei eine der beiden Versorgungsquellen eine Photovoltaik-Sonnenenergiequelle (200) ist, und/ oder wobei eine der beiden Versorgungsquellen eine Netzversorgungsquelle (300) ist.

## Claims

1. A power supply device for an induction installation comprising an inverter (100) supplying at least one inductor (101) and said device comprising:
- at least two power supply inputs, each of which can be connected to a different power source;
- a single unique inverter (100) configured to convert an input electric current originating from one of the at least two power sources into an output electric current;
- means for switching from one power supply source to another, these switching means comprising control means which allow switching between at least two operating modes: a mode adapted for an AC voltage power supply source (300) and a mode adapted for a DC voltage power supply source (200):
wherein said control means comprise a module for maximum power point tracking, MPPT, (600) of the inverter (100), said device being **characterised in that** the MPPT (600) is communicating with a central processor (800), the central processor (800) being configured to control said inverter (100) by modifying its operating frequency by measuring the voltage and current at said inductor (101), when the device is switched to the operating mode adapted for a DC voltage power supply source (200), and wherein the maximum power point tracking module (MPPT) (600) is a computer program configured for use by the central processor (800).

2. The device according to the preceding claim, wherein the maximum power point tracking module (MPPT) (600) is configured to use an algorithm of the Disturbance and Observation type.

3. The device according to any one of the preceding claims wherein said inverter (100) is configured to be frequency controlled by said central processor (800) by sending at least one pulse width modulation (PWM) signal (103) in response to receiving a signal (102) allowing the transfer of data relating to the inductor (101).

4. The device according to the preceding claim wherein said data relating to the inductor (101) are taken from the following: current, voltage, phase of the electrical signal, temperature.

5. The device according to any one of the preceding claims including, for a DC voltage power supply source (200), an electromagnetic compatibility (EMC) filter (201).

6. The device according to any one of the preceding claims including, for a DC voltage source (200), a DC voltage switch (500) and wherein the control means are configured to control the DC voltage switch (500) of the DC voltage source (200) via a relay control (501).

7. The device according to any one of the preceding claims including, for the AC voltage power supply source (300), a switch (400).

8. The device according to the preceding claim wherein the control means are configured to control the AC voltage switch (400) of the AC voltage source (300) via a relay control (401).

9. A battery recharging device for an electric and/or hybrid vehicle including a battery, a charger, a secondary induction device capable of cooperating with the charger and a device according to one of claims 1 to 8 configured so that the inductor (101) generates an induced current in the secondary induction device.

10. A water heating device including a heating body intended to contain a volume of water, an inductive load arranged to heat the volume of water and a device according to one of claims 1 to 8 configured so that the inductor (101) generates an induced current in the inductive load.

11. The device according to the preceding claim including a device according to one of claims 1 to 8, the control means being configured for:
- applying a first temperature set-point, called the AC set-point, for heating the water in the mode adapted for an AC voltage power supply source (300);
- applying a second temperature set-point, called the DC set-point, for heating the water in the mode adapted for a DC voltage power supply source (200);
The second set-point being greater than the first set-point.

12. The device according to the preceding claim wherein the switching means are configured over at least a first predetermined time slot to switch:
- to the DC voltage power supply mode from a power threshold available at the input corresponding to the DC voltage power supply source (200);
- to the AC voltage power supply mode below said power threshold.

13. The device according to claims 11 or 12 wherein the switching means are configured over at least a second predetermined time slot to switch to the AC voltage power supply mode.

14. The device according to any one of the preceding claims, wherein a user interface allows a user to select the operating modes of the device and to configure the latter.

15. An installation including at least two power sources and a device according to one of claims 1 to 8 and/or a device according to one of claims 9 to 14, and wherein one of the two power supply sources is a photovoltaic solar power source (200) and/or wherein one of the two power supply sources is a mains power supply source (300).
